# EUROPÄISCHE PATENTSCHRIFT

(11) **EP 0 438 543 B1**
(45) Veröffentlichungstag und Bekanntmachung des Hinweises auf die Patenterteilung: **01.12.1993**
(21) Anmeldenummer: 90907047.6
(22) Anmeldetag: 21.05.1990
(51) Int. Cl.: B60T 17/22, B60T 13/565

(54) **VERFAHREN FÜR DEN ZUSAMMENBAU EINES KOLBEN-ZYLINDERAGGREGATS MIT EINEM KRAFTÜBERTRAGUNGSELEMENT**
PROCESS FOR THE ASSEMBLY OF A PISTON/CYLINDER UNIT WITH A FORCE-TRANSMISSION ELEMENT
PROCEDE POUR L'ASSEMBLAGE D'UN ENSEMBLE PISTONS/CYLINDRE COMPORTANT UN ELEMENT DE TRANSMISSION DE FORCE

(30) Priorität: 19.07.1989 DE 3923842
(43) Veröffentlichungstag der Anmeldung: 31.07.1991
(73) Patentinhaber: ITT Automotive Europe GmbH, 60488 Frankfurt (DE)
(72) Erfinder: REINARTZ, Hans, Dieter, D-6000 Frankfurt/Main 50 (DE); STEFFES, Helmut, D-6234 Hattersheim 3 (DE)
(86) Internationale Anmeldenummer: EP9000816
(87) Internationale Veröffentlichungsnummer: WO9101462

(56) Entgegenhaltungen:
- EP-A- 0 075 505
- DE-A- 3 424 513
- DE-A- 3 446 005

## Beschreibung

Die Erfindung betrifft ein Verfahren für den Zusammenbau eines Kolben-Zylinderaggregats mit einem Kraftübertragungselement, beispielsweise einem Druckstück, wobei das Aggregat einen ersten Kolben (Druckstangenkolben) sowie einen dem ersten Kolben in Betätigungsrichtung nachgeschalteten zweiten Kolben (Schwimmkolben), sowie je ein dem ersten bzw. zweiten Kolben zugeordnetes Zentralventil aufweist, das den dem Druckstangen- und dem Schwimmkolben zugeordneten Druckraum in Abhängigkeit von der Bewegung der Kolben von einem drucklosen Bremsflüssigkeitsvorratsbehälter trennt bzw. mit dem Bremsflüssigkeitsvorratsbehälter verbindet. Derartige Zentralventile werden beispielsweise in der DE-OS 37 31 603 oder der DE-OS 36 29 564 beschrieben. Durch letzere Schrift wird eine Bremsanlage mit Schlupf- regelung, bestehend im wesentlichen aus einem pedalbetätigten, vorzugsweise hilfskraftunterstützten Bremsdruckgeber, an den über Druckleitungen die Radbremsen angeschlossen sind, aus einem hydraulischen Hilfsdruck-Versorgungssystem mit einer Hydraulikpumpe, mit einem Druckausgleichs- und Druckmittel-Vorratsbehälter und mit einem Hilfsdruck-Regelventil, sowie aus Radsensoren und elektronischen Schaltkreisen zur Ermittlung des Raddrehverhaltens und zur Erzeugung von elektrischen Bremsdrucksteuersignalen, mit denen zur Schlupfregelgung in die Druckmittelleitungen eingefügte elektromagnetisch betätigbare Druckmittel-Einlaßventile und -Auslaßventile steuerbar sind, bekannt.

Der Gegenstand der genannten Offenlegungsschrift ist gekennzeichnet durch einen in die Druckleitung der Hilfskraftquelle eingeschalteten Schalter, der nach Erreichen eines vorbestimmten hydraulischen Drucks schaltet und damit ein elektrisches Signal an die Signalverarbeitungs- und Verknüpfungsschaltung gibt, die für einen Prüfzyklus ein Ein- bzw. Ausschalten des Motors der Pumpe bewirkt und die damit dem Fahrzeugführer über eine optische oder akustische Anzeige die Funktionsbereitschaft der Motor-Pumpeneinheit signalisieren kann.

Bei Kombinationen von Hauptzylindern und Vakuumbremskraftverstärkern, wie sie in der genannten Offenlegungsschrift beschrieben werden, sowie generell beim Zusammenbau eines Kolben-Zylinderaggregats mit einem Kraftübertragungselement, wobei in beiden hintereinander geschalteten Kolben des Aggregats je ein Ventil angeordnet ist, treten die nachfolgend beschriebenen Nachteile auf, die anhand der Zentralventile des Gegenstands der oben genannten Offenlegungsschrift erläutert werden.

Der Zentralventilschließweg der beiden Druckkreise und der damit verbundene Tothub wird durch den Zusammenbau zu groß. Dieser zu große Tothub resultiert aus den vielen sich addierenden Toleranzen der einzelnen Bauteile des Tandemhauptzylinders. Multipliziert man diesen Schließweg mit der Pedalübersetzung, kommt es zu Nachteilen bei der Betätigung des Pedals.

Nach dem Stand der Technik wird der Tandemhauptzylinder bis auf die Distanzscheiben und das Druckstück zusammengebaut, sodann wird das Maß ermittelt, das als Abstand zwischen einerseits der Fläche des Flanschs des Hauptzylinders, der zum Anschluß des Vakuumbremskraftverstärkers dient, und anderereits der Bohrungstiefe des Druckstücks liegt. In einem weiteren Schritt wird dann die Anzahl der Distanzscheiben bestimmt. Die Distanzscheiben und das Druckstück mit Sicherungsring werden anschließend zusammengebaut.

Auf diese Weise wird zwar beim Stand der Technik ein spielfreier Zusammenbau des Tandemhauptzylinders mit dem Vakuumverstärker erreicht. Andererseits gehen aber in sehr nachteiliger Weise sämtliche Toleranzen der einzelnen Bauteile voll in den Zentralventilschließweg ein. Der Tothub der Zentralventile wird entsprechend groß. Er multipliziert sich, wie oben dargestellt, in nachteiliger Weise mit der Pedalübersetzung.

In der DE-OS 34 24 513 wird ein Verfahren zur Verminderung des Leerweges eines Tandemhauptzylinders vorgeschlagen, bei dem zur Einstellung eines Soll-Funktionsmaßes Ausgleichselemente verschiedener Dicken zwischen dem Kolben und der Druckstange benötigt werden. Dies führt aber zu einem erhöhten Montageaufwand und es werden zusätzlich Ausgleichsscheiben benötigt. Auch die Ermittlung der erforderlichen Dicken der Ausgleichselemente kann nur auf hydraulischem Wege erfolgen, d.h. der Druckzylinder muß vor dem Meßvorgang mit Druckflüssigkeit gefüllt und vollständig entlüftet sein. Erst dann kann durch Verschiebung des Druckstangenkolbens überprüft werden, wann das am Druckstangenkolben ausgebildete Zentralventil schließt. Ein derartiger Einstellvorgang ist verhältnismäßig aufwendig und teuer.

Weiterhin wird in der DE-OS 34 46 005 ein Verfahren beschrieben, bei dem nach der Montage des Schwimmkolbens das Maß zwischen diesem und der Fläche des Flansch des Hauptzylinders, der zum Anschluß des Vakuumbremskraftverstärkers dient, bestimmt wird. Daraufhin wird ein Spannelement, das den maximal möglichen Abstand zwischen Schwimmkolben und Druckstangenkolben festlegt, mittels eines Werkzeuges anhand des ermittelten Maßes eingestellt. Dieses Verfahren hat den Nachteil, daß der Zusammenbau des Tandemhauptzylinders zum Zweck des Messens unterbrochen werden muß, und daß das Einstellen des Spannelements und ein nachfolgend notwendiges Sichern gegen Verdrehung, z.B. durch Aufbringen von Schellack, aufwendig und zeitintensiv ist.

Der Erfindung liegen folgende Aufgaben zugrunde:

Die geschilderten Nachteile des Standes der Technik sollen vermieden werden. Der Zentralventilschließweg soll verkürzt werden. Es soll vermieden werden, daß sich die Toleranzen der einzelnen Bauteile addieren und in den Zentralventilschließweg eingehen.

Der Kostenaufwand für die Montage des Zylinders soll reduziert werden. Das Einstellen des Schließwegs des Zentralventils soll im Rahmen der Einstellung des gesamten Zylinders durchgeführt werden.

Es soll möglich werden, Bauteile mit größeren Toleranzen einzusetzen. Hierdurch soll der Endpreis des Produktes gesenkt werden.

Die gestellten Aufgaben werden erfindungsgemäß durch ein besonderes Verfahren für den Zusammenbau des Kolben-Zylinderaggregats und des Kraftübertragungselements gelöst. Nach diesem Verfahren wird vorgesehen, daß zur Reduzierung des Tothubs des insbesondere im Schwimmkolben angeordneten Zentralventils, vorzugsweise des Hubs des Schließkörpers und/oder des Ventilsitzes des Zentralventils, das Zentralventil, insbesondere als integrales Bestandteil des Schwimmkolbens, mit diesem in Richtung Druckerhöhung bewegt wird, daß gleichzeitig die den beiden Kolben zugeordneten Druckräume mit einem Meßmedium, insbesondere Luft, beaufschlagt werden, während das dem Druckstangenkolben zugeordnete Zentralventil offen bleibt, wobei der in dem dem Schwimmkolben zugeordneten Druckraum herrschende Druck der aufgrund des Schließvorgangs des Zentralventils eine markante Steigerung erfährt, gemessen wird, daß der Weg des Zentralventils von seiner Ausgangsposition bis zur markanten Steigerung (MeBweg) als Information für die Dimensionierung eines oder mehrer Distanzstücke, insbesondere Distanzscheiben, die zwischen dem Kraftübertragungselement, insbesondere dem Druckstück, und dem Druckstangenkolben anzuordnen sind, genutzt wird.

Ein besonders elegantes und automatisierungsgerechtes Verfahren besteht darin, daß in beide Druckräume Druckmedium, insbesondere Druckluft, eingeblasen wird, die zunächst durch die Zentralventile in die zum Bremsflüssigkeitsvorratsbehälter führenden Kanäle gelangt, daß beide Kolben in Richtung vom Bremspedal fortbewegt werden, daß während der Bewegung der Kolben der Luftdruck im zweiten Druckraum gemessen wird, daß der durch die während des Schließvorgangs des Zentralventils eintretende markante Erhöhung des Luftdrucks definierte Meßweg des Schwimmkolbens ermittelt wird, daß der Meßweg als Information für die Dimensionierung einer oder mehrerer Distanzstücke, insbesondere Distanzscheiben, die zwischen dem Kraftübertragungselement und dem Kolben anzuordnen sind, genutzt wird.

Eine alternative Ausführung zum soeben beschriebenen Verfahren besteht darin, daß die beiden Druckräume mit dem gleichen Druck beaufschlagt werden.

Weiterhin wird vorgeschlagen, daß die beiden Druckräume mit unterschiedlich hohen Drücken beaufschlagt werden.

Bei dem soeben beschriebenen Verfahren kann vorgesehen werden, daß ein meßtechnischer Triggerpunkt festgelegt wird, der sich im letzten Abschnitt der die markante Druckerhöhung über den Weg des Zentralventils beschreibenden Linie, insbesondere Gerade, eines Druck-über-Weg-Diagramms befindet und den Meßweg begrenzt.

Ein Hauptzylinder-Bremskraftverstärkeraggregat mit einem Druckstück, das die Kraft des Bremskraftverstärkers auf den Druckstangenkolben des Hauptzylinders überträgt, zusammengebaut nach einem der beschriebenen Verfahren kann derart ausgestaltet sein, daß eine oder mehrere Distanzstücke, insbesondere Distanzscheiben, zwischen dem Druckstangenkolben des Hauptzylinders und dem Druckstück angeordnet sind, das beziehungsweise die aufgrund mindestens eines Meßwegs dimensioniert wurden.

Für die Durchführung der beschriebenen Verfahren wird eine Vorrichtung vorgeschlagen, bei der vorgesehen ist, daß eine Meßeinrichtung für den Weg des Schwimmkolbens und eine Meßeinrichtung für den im zweiten Druckraum des Hauptzylinders herrschenden Druck, insbesondere Luftdruck, vorgesehen sind, daß eine Informationsverarbeitungseinheit vorgesehen ist, die den Verlauf des Drucks über den Kolbenweg und den Meßweg bis zum markanten Druckanstieg ermittelt.

Es wird weiterhin eine Vorrichtung vorgeschlagen, die so aufgebaut ist, daß eine Meßeinrichtung für den Weg des Schwimmkolbens und eine Meßeinrichtung für den zweiten im Druckraum des Hauptzylinders herrschenden Druck vorgesehen sind, daß eine Informationsverarbeitungseinheit vorgesehen ist, die den Verlauf des Drucks über den Kolbenweg, einen Triggerpunkt im Verlauf des Druckanstiegs, insbesondere im letzten Bereich des Druckanstiegs, und den Meßweg des Kolbens bis zum Triggerpunkt ermittelt.

Es kann weiterhin eine Einrichtung vorgesehen werden, die aufgrund des Meßwegs die Dimensionierung und/oder Anzahl der Distanzstücke, insbesondere Distanzscheiben, ermittelt und anzeigt.

Weitere Einzelheiten der Erfindung sind der folgenden Beschreibung zweier Ausführungsbeispiele zu entnehmen. Dies Ausführungsbeispiele werden anhand von zwei Figuren erläutert.
- Figur 1: zeigt einen Hauptzylinder, der für den Zusammenbau mit einem Vakuumbremskraftverstärker vorgesehen ist,
- Fig. 2: zeigt ein Luftdruck-Weg-Diagramm.

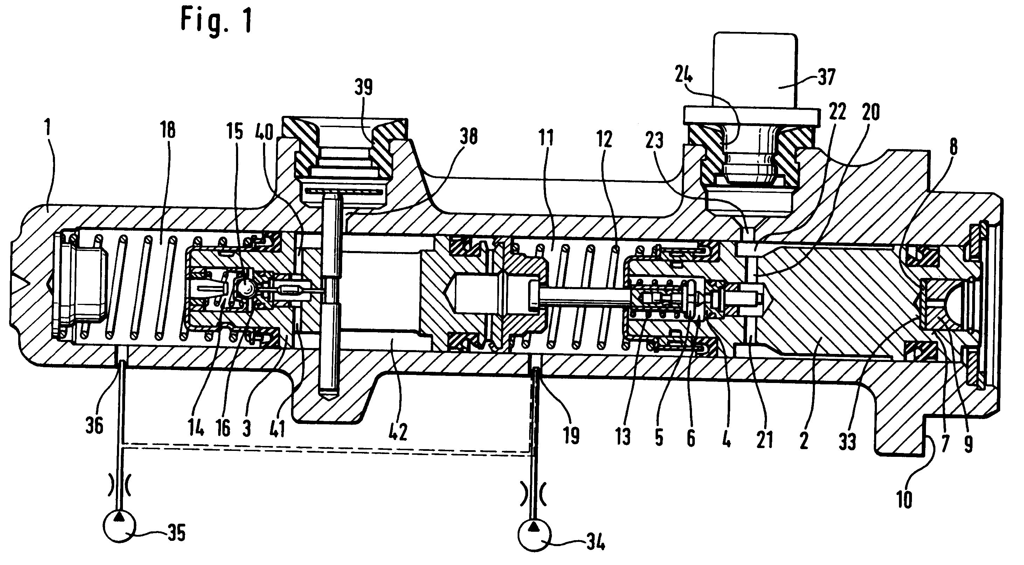

Der in Figur 1 gezeigte Hauptzylinder besteht aus einem Gehäuse 1 und zwei im Gehäuse untergebrachten Kolben, dem Druckstangenkolben 2 und dem Schwimmkolben 3, die in ihrem Inneren je ein Zentralventil 6,14 aufnehmen. Die Funktion des Zentralventils wird in der oben genannten Offenlegungsschrift 37 31 603 und im Bremsenhandbuch der Alfred Teves GmbH, 8. Auflage 1984, siehe u.a. Seite 74 beschrieben. Das im Druckstangenkolben 2 befindliche Zentralventil 6 weist einen Ventilsitz 4 und einen Ventilschließkörper 5 auf, während das im Schwimmkolben 3 angeordnete Zentral- ventil 14 einen Ventilsitz 16 und einen vorzugsweise kugelförmigen Ventilschließkörper 15 aufweist.

Pedalseitig ist der Druckstangenkolben 2 mit einer Sacklochbohrung 7 versehen. Die Sacklochbohrung weist die Bodenfläche 33 auf. Die Bohrung nimmt ein Distanzstück 8 und ein Druckstück 9 auf. Anstelle des Distanzstücks können mehrere Distanzscheiben eingebaut werden.

Im Bereich der Flanschfläche 10 wird der Tandemhauptzylinder während der Montage mit einem nicht dargestellten Vakuumbremskraftverstärker verbunden, siehe hierzu die oben genannten Offenlegungsschriften.

Nach dem Stand der Technik werden Tandemhauptzylinder und Vakuumbremskraftverstärker wie folgt zusammengebaut:

Zuerst wird das Maß (Einstellmaß) ermittelt, das zwischen der Flanschfläche 10 und dem Boden 33 der Sacklochbohrung (Druckstückbohrungstiefe) besteht. Danach wird dann insbesondere die axiale Ausdehnung des Distanzstücks 8 oder die Anzahl der Distanzscheiben bestimmt.

Das Distanzstück, bzw. die Distanzscheiben, dienen zur Übertragung der translatorischen Kraft, die vom Vakuumbremskraftverstärker auf das Druckstück 9 aufgeprägt wird. Das Distanzstück, bzw. die Distanzscheiben, leiten diese Kraft weiter auf den Druckstangenkolben 2.

Das durch das Verfahren des Standes der Technik ermittelte Einstellmaß erlaubt einen spielfreien Zusammenbau des Tandemhauptzylinders und des Vakuumbremskraftverstärkers. Der Nachteil dieses Verfahrens besteht darin, daß sämtliche Toleranzen der einzelnen Bauteile voll in den Schließweg des zweiten Zentralventils eingehen. Am Pedal multipliziert sich dabei der große Tothub des zweiten Zentralventils mit dem Pedalübersetzungsverhältnis, was zu Nachteilen bei der Betätigung des Bremspedals führt.

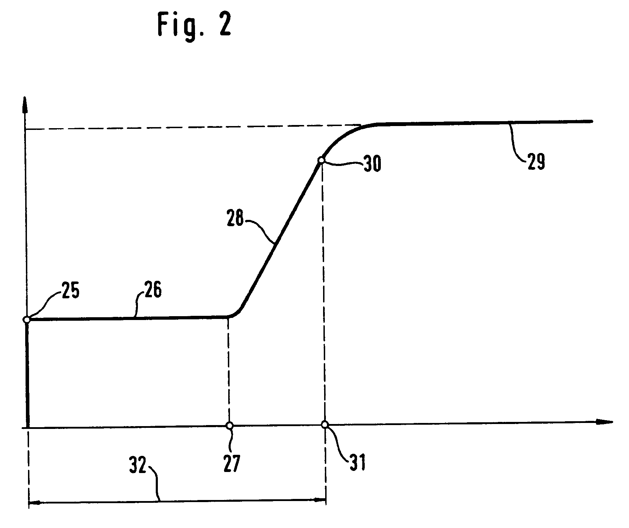

Nachfolgend die Beschreibung der erfindungsgemäßen Verfahren, bei denen im geschlossenen Zustand des zweiten Zentralventils 14 das Maß von der Flanschfläche 10 bis zum Boden 33 der Druckstückbohrung 7 ermittelt wird, wobei die Vorgänge anhand des Diagramms nach Fig. 2 erläutert werden.

Die Abszisse trägt die Maßeinheiten des Wegs des zweiten Zentralventils, bzw. des Schwimmkolbens, in dem das zweite Zentralventil als integraler Bestandteil untergebracht ist, während auf der Ordinate Maßeinheiten eines Luftdrucks angegeben sind, der beim Meßvorgang im zweiten Druckraum 18 herrscht.

Der Tandemhauptzylinder wird bis auf das Distanzstück 8, bzw. die Distanzscheiben, und bis auf das Druckstück 9 zusammengebaut. Das Maß zwischen Flanschfläche 10 und Boden 33 der Druckstückbohrung wird unter Zuhilfenahme der Messung eines pneumatischen Druckes ermittelt. Im einzelnen geschieht folgendes:

Beide Druckräume 11,18 werden mit pneumatischem Druck beaufschlagt, der von zwei Druckluftquellen 34,35 geliefert wird. Hierzu werden die Druckanschlüsse 19,36 des Hauptbremszylinders für die beiden Druckräume 11,18 benutzt. Die in den ersten Druckraum 11 eingeblasene Druckluft, die die Wirkung der die beiden Kolben 2,3 auseinanderdrückenden Feder 12 unterstützt, entweicht beim geöffneten ersten Zentralventil 6 zwischen dessen Schließkörper und Ventilsitz 4, über die radial angeordneten Bohrungen 20,21, den Ringraum 22, den Kanal 23, über den Anschluß 24 für den Vorratsbehälter nach außen. Es ist jedoch auch denkbar, daß der Anschluß 24 bei der Messung beispielsweise mittels eines geeigneten Verschlußstückes 37 verschlossen wird. Durch die Druckbeaufschlagung des ersten Druckraumes 11 wird gewährleistet, daß eine Relativbewegung der beiden Kolben 2,3 zueinander mit Sicherheit ausgeschlossen wird, so daß das erste Zentralventil 6 während der Messung offen bleibt.

Die in den zweiten Druckraum 18 eingeblasene Druckluft, deren Anfangsdruck im Diagramm nach Fig. 2 im Punkt 25 eingetragen wird, kann zunächst durch das offene zweite Zentralventil 14 über die radialen Bohrungen 40,41, den Ringraum 42, den Kanal 38 und den Anschluß 39 für den Vorratsbehälter nach außen entweichen. Der Druck der in den ersten Druckraum 11 eingeblasenen Luft ist vorzugsweise höher als der den zweiten Druckraum 18 beaufschlagende Luftdruck. Nunmehr werden die beiden Kolben 2,3 in Fig. 1 nach links bewegt. Der Luftdruck im zweiten Druckraum 18 bleibt zunächst annähernd konstant, siehe Gerade 26 der Figur 2. Beim Punkt 27 auf der Abszisse ist die Bewegung des Schwimmkolbens 3 so weit fortgeschritten, daß der Schließ- vorgang des zweiten Zentralventils 14 beginnt.

Der Durchströmquerschnitt für die Luft zwischen Ventilkörper 15 und Ventilsitz 16 des zweiten Zentralventils 14 wird reduziert. Das heißt, der Luftdruck im zweiten Druckraum 18 steigt an. Dies wird im Diagramm deutlich gemacht durch die ansteigende Linie, die wie aus Fig. 2 ersichtlich, in einem größeren Bereich als Gerade 28 ausgebildet ist. Schließlich ist das zweite Zentralventil 14 geschlossen und im Druckraum 18 hat sich ein erhöhter Druck eingestellt. Dies wird im Diagramm durch die Gerade 29 wiedergegeben.

Während der Bewegung de Schwimmkolbens 3 nach links wird fortlaufend der Druck im Druckraum 18 gemessen. Im letzten Stück der Geraden 28 wird ein Triggerpunkt 30 meßtechnisch festgelegt. Mit Hilfe dieses Triggerpunkts wird der Punkt 31 auf der Abszisse bestimmt. Die Entfernung zwischen dem Null-Punkt und dem Punkt 31 auf der Abszisse ist der Meßweg 32. Dieser Meßweg, das heißt, der Weg des zweiten Zentralventils 14, bzw. des Schwimmkolbens 3, bis zum Triggerpunkt wird als Information für die Dimensionierung des Distanzstücks 8 oder einer oder mehrer Distanzscheiben benutzt, die anschließend zwischen Druckstück 9 und Druckstangenkolben 2 am Boden 33 anliegend einnelegt werden.

Im Rahmen des erfinderischen Gedankens ist jedoch auch denkbar, die beiden Druckräume 11,18 mit Druckluft unter gleichem Druck zu beaufschlagen, wie in Fig. 1 gestrichelt dargestellt ist. Um zu gewährleisten, daß während der Messung keine Relativbewegung der beiden Kolben 2,3 zueinander stattfindet, muß beim Meßvorgang der zum Behälteranschluß 24 führende Kanal 23 luftdicht abgesperrt werden, vorzugsweise durch Verschließen des Behälteranschlusses 24 mittels des oben erwähnten Verschlußstückes 37.

### Bezugszeichenliste

- 1: Gehäuse
- 2: Druckstangenkolben
- 3: Schwimmkolben
- 4: Ventilsitz
- 5: Ventilschließkörper
- 6: Zentralventil
- 7: Sacklochbohrung, Druckstückbohrung
- 8: Distanzstück
- 9: Druckstück, Kraftübertragungselement
- 10: Flanschfläche
- 11: erster Druckraum
- 12: Feder
- 13: Feder
- 14: Zentralventil
- 15: Schließkörper
- 16: Ventilsitz
- 17: --
- 18: zweiter Druckraum
- 19: Druckanschluß
- 20: Bohrung
- 21: Bohrung
- 22: Ringraum
- 23: Kanal
- 24: Anschluß
- 25: Punkt
- 26: Gerade
- 27: Punkt
- 28: Gerade
- 29: Gerade
- 30: Triggerpunkt
- 31: Punkt
- 32: Meßweg
- 33: Boden
- 34: Druckluftquelle
- 35: Druckluftquelle
- 36: Druckanschluß
- 37: Verschlußstück
- 38: Kanal
- 39: Anschluß
- 40: Bohrung
- 41: Bohrung
- 42: Ringraum

## Patentansprüche

1. Verfahren für den Zusammenbau eines Kolben-Zylinderaggregats mit einem Kraftübertragungselement, beispielsweise einem Druckstück (9), wobei das Aggregat einen ersten Kolben (2) (Druckstangenkolben (2)) sowie einen dem ersten Kolben (2) in Betätigungsrichtung nachgeschalteten zweiten Kolben (3) (Schwimmkolben (3)), sowie je ein dem ersten bzw. zweiten Kolben (2 bzw. 3) zugeordnetes Zentralventil (6 bzw. 14) aufweist, das den dem Druckstangen- (2) und dem Schwimmkolben (3) zugeordneten, ersten bzw. zweiten Druckraum (11,18) in Abhängigkeit von der Bewegung der Kolben (2,3) von einem drucklosen Bremsflüssigkeitsvorratsbehälter trennt bzw. mit dem Bremsflüssigkeitsvorratsbehälter verbindet, wobei zur Reduzierung des Tothubs des Kolbenzylinderaggregats ein oder mehrere Distanzstücke (8) zwischen den Kraftübertragungselement, insbesondere dem Druckstück (9), und dem Druckstangenkolben (2) eingebaut werden, dadurch **gekennzeichnet,** daß zur Reduzierung des Tothubs des insbesondere im Schwimmkolben (3) angeordneten Zentralventils (14), vorzugsweise des Hubs des Schließkörpers (15) und/oder des Ventilsitzes (16) des Zentralventils, das Zentralventil, insbesondere des als integrales Bestandteil des Schwimmkolbens (3), mit diesem in Richtung Druckerhöhung bewegt wird, daß gleichzeitig die den Kolben (2,3) zugeordneten Druckräume (11,18) mit einem Meßmedium, insbesondere Luft, beaufschlagt werden, während das dem Druckstangenkolben (2) zugeordnete Zentralventil (6) offen bleibt, wobei der in dem dem Schwimmkolben (3) zugeordneten Druckraum (11) herrschende Druck, der aufgrund des Schließvorgangs des Zentralventils (14) eine meßbare Steigerung erfährt, gemessen wird, daß der Weg des Zentralventils von seiner Ausgangsposition bis zur meßbaren Steigerung (Meßweg (32)) als Information für die Dimensionierung des oder der Distanzstücke (8) genutzt wird.

2. Verfahren nach Anspruch 1, dadurch **gekennzeichnet,** daß in beide Druckräume (11,18) Druckmedium, insbesondere Druckluft, eingeblasen wird, die zunächst durch die Zentralventile (6,14) in die zum Bremsflüssigkeitsvorratsbehälter führenden Kanäle (23,38) gelangt, daß beide Kolben (2,3) in Richtung vom Bremspedal fort bewegt werden, daß der Luftdruck im zweiten Druckraum (18) gemessen wird, daß der durch die während des Schließvorganges des Zentralventils (14) eintretende meßbare Erhöhung des Luftdrucks definierte Meßweg (32) des Schwimmkolbens (3) ermittelt wird.

3. Verfahren nach Anspruch 1 oder 2, dadurch **gekennzeichnet,** daß die beiden Druckräume (18,11) mit dem gleichen Druck beaufschlagt werden.

4. Verfahren nach Anspruch 1 oder 2, dadurch **gekennzeichnet,** daß die beiden Druckräume (18,11) mit unterschiedlich hohen Drücken beaufschlagt werden.

5. Verfahren nach Anspruch 3 oder 4, dadurch **gekennzeichnet,** daß der dem ersten Druckraum (11) zugeordnete, zum Bremsflüssigkeitsvorratsbehälter führende Kanal (23) abgesperrt wird.

6. Verfahren nach Anspruch 1 oder 5, dadurch **gekennzeichnet,** daß ein meßtechnischer Triggerpunkt (30) festgelegt wird, der sich im letzten Abschnitt der die meßbare Druckerhöhung über den Weg des Zentralventils beschreibenden Linie, insbesondere Gerade (28), eines Druck-über-Weg-Diagramms befindet und den Meßweg (32) begrenzt.

7. Kolben-Zylinderaggregat zusammengebaut mittels eines Verfahrens nach einem oder mehreren der vorhergehenden Ansprüche, dadurch **gekennzeichnet,** daß eine oder mehrere Distanzstücke (8), insbesondere Distanzscheiben, zwischen dem Druckstangenkolben (2) des Hauptzylinders und dem Druckstück (9) angeordnet sind, das beziehungsweise die aufgrund des Meßweges (32) dimensioniert wurden.

8. Vorrichtung zur Durchführung eines Verfahrens nach einem oder mehreren der vorhergehenden Ansprüche, dadurch **gekennzeichnet,** daß eine Meßeinrichtung für den Weg des Schwimmkolbens (3) und eine Meßeinrichtung für den im zweiten Druckraum (18) des Hauptzylinders herrschenden Druck, insbesondere Luftdruck, vorgesehen sind, daß eine Informationsverarbeitungseinheit vorgesehen ist, die den Verlauf des Drucks über dem Kolbenweg und den Meßweg (32) bis zum meßbaren Druckanstieg ermittelt.

9. Vorrichtung nach Anspruch 8, dadurch **gekennzeichnet,** daß eine Meßeinrichtung für den Weg des Schwimmkolbens (3) und eine Meßeinrichtung für den im zweiten Druckraum (18) des Hauptzylinders herrschenden Druck, insbesondere Luftdruck, vorgesehen sind, daß eine Informationsverarbeitungseinheit vorgesehen ist, die den Verlauf des Drucks über dem Kolbenweg, einen Triggerpunkt (30) im Verlauf des Druckanstiegs, insbesondere im letzten Bereich des Druckanstiegs, und den Meßweg (32) bis zum Triggerpunkt (30) ermittelt.

10. Vorrichtung nach Anspruch 8 oder 9, dadurch **gekennzeichnet,** daß eine Einrichtung vorgesehen ist, die aufgrund des Meßwegs (32) die Dimensionierung und/oder Anzahl der Distanzstücke (8), ermittelt und anzeigt.

## Claims

1. A method for assembling a piston-and-cylinder unit and a force transmission element, for instance a pressure element (9), the said unit comprising a first piston (2) (push rod piston (2)) as well as a second piston (3) (floating piston (3)) connected downstream of the first piston (2) in the actuating direction, as well as comprising each one central valve (6 and 14, respectively) allocated to the first and second piston, respectively (2 and 3, respectively), which separates the first and second pressure chamber, respectively (11, 18) assigned to the push rod piston (2) and the floating piston (3) from an unpressurized brake fluid supply reservoir and/or connects it to the brake fluid supply reservoir in dependence on the movement of the pistons (2, 3), wherein to reduce the lost travel of the piston-and-cylinder unit one ore more spacers (8) are fitted between the force transmission element, in particular the pressure element (9), and the push rod piston (2),
**characterised** in that in order to reduce the lost travel of the central valve (14) which is arranged in particular in the floating piston (3), preferably the travel of the closing member (15) and/or the valve seat (16) of the central valve, the central valve, in particular in its capacity as an integral component part of the floating piston (3), is moved with the latter in the direction of pressure increase, in that simultaneously the pressure chambers (11, 18) associated with the pistons (2, 3) are acted upon by a measurement medium, in particular air, while the central valve (6) allocated to the push rod piston (2) remains open, with the pressure being measured which prevails in the pressure chamber (11) allocated to the floating piston (3) and experiences a measurable increase due to the closing action of the central valve (14), in that the travel of the central valve from its initial position up to the measurable increase (measured distance) (32) is used as information for the dimensioning of one or a plurality of spacers (8).

2. A method as claimed in claim 1,
**characterised** in that pressure medium, in particular compressed air, is injected into both pressure chambers (11, 18), which air at first propagates through the central valves (6, 14) and enters the channels (23, 38) leading to the brake fluid supply reservoir, in that both pistons (2, 3) are moved in the direction away from the brake pedal, in that the air pressure in the second pressure chamber (18) is measured, in that the measured distance of the floating piston (3) is determined which is defined by the measurable increase in the air pressure occurring during the closing action of the central valve (14).

3. A method as claimed in claim 1 or 2,
**characterised** in that the same amount of pressure is applied to both pressure chambers (18, 11).

4. A method as claimed in claim 1 or 2,
**characterised** in that differently high pressures are applied to the two pressure chambers (18, 11).

5. A method as claimed in claim 3 or 4,
**characterised** in that the channel (23) allocated to the first pressure chamber (11) and leading to the brake fluid supply reservoir will be closed.

6. A method as claimed in claim 1 or 5,
**characterised** in that a trigger point (30) for measuring purposes is determined which is disposed in the last portion of the line, in particular the straight line (28), of a pressure-travel diagram and which limits the measured distance (32), the said line describing the measurable increase in pressure as a function of the central valve's travel.

7. A piston-and-cylinder unit assembled according to the method as claimed in any one or more of the preceding claims,
**characterised** in that one or a plurality of spacers (8), in particular spacing washers, are arranged between the push rod piston (2) of the master cylinder and the pressure element (9), which spacer(s) was/were dimensioned on the basis of the measured distance (32).

8. A device for implementing a method as claimed in any one or more of the preceding claims,
**characterised** in that there are arranged a measuring device for the travel of the floating piston (3) and a measuring device for the pressure, in particular air pressure, prevailing in the second pressure chamber (18) of the master cylinder, in that an information-processing unit is provided which determines the variation of the pressure as a function of the piston travel and the measured distance (32) up to the measurable pressure increase.

9. A device as claimed in claim 8,
**characterised** in that there are arranged a measuring device for the travel of the floating piston (3) and a measuring device for the pressure, in particular air pressure, prevailing in the second pressure chamber (18) of the master cylinder, in that an information-processing unit is provided which determines the variation of the pressure as a function of the piston travel, a trigger point (30) in the course of the pressure increase, in particular in the last portion of the pressure increase, and the measured distance (32) up to the trigger point (30).

10. A device as claimed in claim 8 or 9,
**characterised** in that a device is provided which, based on the measured distance (32), determines and indicates the dimensioning and/or the number of the spacers (8).

## Revendications

1. Procédé d'assemblage d'un ensemble piston-cylindre avec un élément de transmission de force, par exemple une pièce de pression (9), l'ensemble piston-cylindre comprenant un premier piston (2) (piston de tige de pression 2) et un second piston (3) (piston flottant 3) disposé en aval du premier piston (2) selon la direction d'actionnement, ainsi que, associées à chacun des premier et second pistons (2, 3), des valves centrales (6, 14) qui, en fonction du mouvement des pistons (2, 3), séparent d'un réservoir de stockage de liquide de freinage sans pression respectivement la première et la seconde chambres de pression (11, 18) associées au piston de tige de pression (2) et au piston flottant (3) ou font communiquer ces chambres de pression avec le réservoir de stockage de liquide de freinage, tandis que, pour réduire la course morte de l'ensemble piston-cylindre, une ou plusieurs pièces-entretoises sont montées entre l'élément de transmission de force, notamment la pièce de pression (9), et le piston de tige de pression (2), caractérisé en ce que, pour réduire la course morte de la valve centrale (14) disposée notamment dans le piston flottant (3), de préférence pour réduire la course du corps de fermeture (15) et/ou du siège de valve (16) de la valve centrale, la valve centrale, notamment sous la forme d'un élément constitutif formant une seule pièce avec le piston flottant (3), est déplacée avec ce dernier dans le sens d'une augmentation de pression, en ce qu'en même temps, les chambres de pression (11, 18) associées aux pistons (2, 3) sont soumises à l'action d'un fluide de mesure, notamment de l'air, tandis que la valve centrale (6) associée au piston de tige de pression (2) reste ouverte, de sorte qu'est mesurée la pression qui règne dans la chambre de pression (11) associée au piston flottant (3) et qui est l'objet d'une augmentation mesurable sous l'effet de l'opération de fermeture de la valve centrale (14), et en ce que la course de la valve centrale depuis sa position initiale jusqu'à l'augmentation mesurable (course de mesure 32) est utilisée comme information pour le dimensionnement de la ou des pièces-entretoises (8).

2. Procédé suivant la revendication 1, caractérisé en ce qu'un fluide de pression, notamment de l'air comprimé, est introduit dans les deux chambres de pression (11, 18), ce fluide de pression parvenant d'abord, par les valves centrales (6, 14), dans les conduits (23, 38) menant au réservoir de stockage de liquide de freinage, en ce que les deux pistons (2, 3) se déplacent en direction de la pédale de frein, en ce que la pression d'air dans la seconde chambre de pression (18) est mesurée et en ce que la course de mesure (32) du piston flottant (3) qui est définie par l'augmentation mesurable de la pression d'air se produisant pendant l'opération de fermeture de la valve centrale (14) est déterminée.

3. Procédé suivant l'une des revendications 1 et 2, caractérisé en ce que les deux chambres de pression (18, 11) sont soumises à la même pression.

4. Procédé suivant l'une des revendications 1 et 2, caractérisé en ce que les deux chambres de pression (18, 11) sont soumises à des pressions élevées différentes.

5. Procédé suivant l'une des revendications 3 et 4, caractérisé en ce que le conduit (23) conduisant au réservoir de stockage de liquide de freinage, associé à la première chambre de pression (11), est bloqué.

6. Procédé suivant l'une des revendications 1 et 5, caractérisé en ce qu'il est fixé un point de déclenchement (30), relevant de la technique de mesure, qui, d'une part, se trouve dans le dernier tronçon de la ligne, notamment de la ligne droite (28), d'un graphe de la pression en fonction de la course, qui décrit l'augmentation de pression mesurable en fonction de la course de la valve centrale, et qui, d'autre part, limite la course de mesure (32).

7. Ensemble piston-cylindre, assemblé au moyen d'un procédé suivant une ou plusieurs des revendications précédentes, caractérisé en ce qu'une ou plusieurs pièces-entretoises (8), notamment des disques-entretoises, sont disposées entre le piston de tige de pression (2) du maître-cylindre et la pièce de pression (9), cette ou ces pièces-entretoises ayant été dimensionnées sur la base de la course de mesure (32).

8. Dispositif de mise en oeuvre d'un procédé suivant une ou plusieurs des revendications précédentes, caractérisé en ce qu'il est prévu des moyens de mesure de la course du piston flottant (3) et des moyens de mesure de la pression, notamment de la pression d'air, régnant dans la seconde chambre de pression (18) du maître-cylindre, et en ce qu'il est prévu une unité de traitement d'information qui détermine la variation de la pression en fonction de la course du piston et la course de mesure (32) jusqu'à l'augmentation mesurable de pression.

9. Dispositif suivant la revendication 8, caractérisé en ce qu'il est prévu des moyens de mesure de la course du piston flottant (3) et des moyens de mesure de la pression, notamment de la pression d'air, régnant dans la seconde chambre de pression (18) du maître-cylindre, en ce qu'il est prévu une unité de traitement d'information qui détermine la variation de la pression en fonction de la course du piston, un point de déclenchement (30) dans la variation de l'augmentation de pression, notamment dans la dernière zone de l'augmentation de pression, et la course de mesure (32) jusqu'au point de déclenchement (30).

10. Dispositif suivant l'une des revendications 8 et 9, caractérisé en ce qu'il est prévu des moyens qui, en fonction de la course de mesure (32), déterminent et affichent le dimensionnement et/ou le nombre des pièces-entretoises (8).
